# EUROPEAN PATENT APPLICATION

(11) **EP 2 903 292 A1**
(43) Date of publication of application: **05.08.2015**
(21) Application number: 12885336.3
(22) Date of filing: 28.09.2012
(51) Int. Cl.: H04N 21/458

(54) **APPARATUS AND METHOD FOR CONTROLLING ADVERTISEMENT**

(71) Applicant: Zapple Inc., Seoul 135-509 (KR)
(72) Inventor: KIM, Jong Ryul, Seoul 151-015 (KR)
(74) Representative: Isarpatent
(86) International application number: PCT/KR2012/007920
(87) International publication number: WO 2014/051181

(57) **Abstract**

An apparatus for controlling display of an advertisement includes a receiving terminal receiving a signal according to an operation of a remote controller, a transmitting terminal transmitting the display control signal received through the receiving terminal to a set-top box, a data transceiving terminal receiving advertisement data and advertisement information registered in the advertisement server, a data inputting terminal receiving the broadcasting data or the advertisement data, a data outputting terminal outputting the broadcasting data or the advertisement data input to the data inputting terminal to the display, and a control unit blocking the output of the broadcasting data to the display and controlling the output of the advertisement data when a broadcasting channel change signal is input through the receiving terminal during a period in which the broadcasting data are output through the display.

## Description

### [Technical Field]

The present invention relates to an apparatus and a method for controlling the display of an advertisement, and more particularly, to an apparatus and a method of controlling the output of an advertisement during a zapping time before changed broadcasting data are output in the case in which a broadcasting channel change request is generated during broadcasting data are output through a display.

### [Background Art]

Generally, in order to provide cable broadcasting, satellite broadcasting, or the like, a set-top box is installed in each user's home. A broadcasting server transmits broadcasting to the set-top box, which is then provided to the user through a television.

Recently, set-top boxes have also been used to provide advertisements. As an example, in Korean Patent Application No. 2010-0000346, a technology of inserting a logo advertisement into analog and digital television screens using a set-top box for broadcasting into which a television tuner has been inserted is disclosed. However, in order to insert the television tuner into the set-top box, it is necessary to modify or replace the set-top box already present in many consumers' homes, which causes an increase in costs.

In addition, a method in which a screen for an advertisement and a screen for a broadcast are separately configured has been disclosed. In such a method, the screen for the advertisement is set as a background, such that the screen for the advertisement does not appear when the broadcast is being displayed, but appears when the broadcast is not being displayed.

### [Disclosure]

### [Technical Problem]

One advantage provided by embodiments of the present invention is that it is possible to provide a display showing broadcasting data and an advertisement without replacing an existing set-top box by introduction of a control apparatus between the display and the set-top box.

Another advantage of embodiments of the present invention is that it is possible to control the display of an advertisement without using a separate screen to display the content.

### [Technical Solution]

In one embodiment of the present invention, there is provided an apparatus for controlling the display of an advertisement, including: a receiving terminal disposed in direction of a front of a display and receiving a display control signal according to an operation of a remote controller; a transmitting terminal transmitting the display control signal to a set-top box managing broadcasting data of the display; a data inputting terminal electrically connected to a data outputting terminal of the set-top box to receive broadcasting data output from the set-top box; a data transceiving terminal communicatively connected to an advertisement server to receive advertisement data and advertisement information registered in the advertisement server; a data outputting terminal electrically connected to the display to output any of the broadcasting data and the advertisement data input to the data inputting terminal to the display; and a control unit blocking the output of the broadcasting data to the display, and controlling the output of the advertisement data when a broadcasting channel change signal is input through the receiving terminal during a period in which the broadcasting data are output through the display.

The control unit may include: a channel change sensing unit sensing the broadcasting channel change signal among signals according to the operation of the remote controller; an advertisement outputting controlling unit blocking the output of the broadcasting data to the display and controlling the advertisement data received from the advertisement server to be output to the display for a preset time when the broadcasting channel change signal is sensed by the channel change sensing unit; and an advertisement completion information managing unit generating advertisement completion information on the advertisement data output to the display and transmitting the generated advertisement completion information to the advertisement server.

The advertisement outputting controlling unit may block the output of the advertisement data when the preset time elapses from a point in time at which the advertisement data input from the set-top box are output to the display.

The advertisement outputting controlling unit may release the blocking of the output of the broadcasting data to the display when the preset time elapses from the point in time at which the advertisement data input from the set-top box are output to the display.

The advertisement completion information managing unit may generate a list of advertisement data output to the display for a predetermined period and transmit the generated list to the advertisement server.

The control unit may further include a data processing unit managing the advertisement data received from the advertisement server.

The data processing unit may download an advertisement update data from the advertisement server at a predetermined cycle to sequentially update the advertisement data.

The data processing unit may output the advertisement data to the display according to preset sequence information based on a control command of the advertisement outputting controlling unit and delete the advertisement data output to the display.

The transmitting terminal may correspond to an infrared (IR) transmitting terminal and the receiving terminal may correspond to an IR receiving terminal.

In another aspect of the present invention, there is provided a method for controlling the display of an advertisement, including: sensing a broadcasting channel change signal among signals received according to an operation of a remote controller during a period in which broadcasting data from a set-top box relaying the broadcasting data are output through a display; blocking the output of the broadcasting data to the display when the broadcasting channel change signal is sensed; outputting advertisement data received from an advertisement server in which the advertisement data and advertisement information are registered to the display for a preset time; and blocking the output of the advertisement data and releasing the blocking of the output of the broadcasting data to the display when the preset time elapses from a point in time at which the advertisement data are output to the display.

In the outputting of the advertisement data, the advertisement data may be output to the display according to preset sequence information on the advertisement data.

The method for controlling an advertisement may further include transmitting advertisement completion information on the advertisement data output to the display to the advertisement server.

The advertisement completion information may include a list of advertisement data output to the display for a predetermined period.

The method for controlling an advertisement may further include downloading an advertisement update data from the advertisement server at a predetermined cycle to sequentially update the advertisement data, and further include, after the outputting of the advertisement data, deleting the advertisement data output to the display.

### [Advantageous Effects]

According to an embodiment of the present invention, an advertisement control apparatus may couple a display, which displays an advertisement and the broadcasting data, and a set-top box. As a result, it is possible to provide the broadcasting data and the advertisement to the display of a user without replacing an existing set-top box.

In addition, according to an embodiment of the present invention, an advertisement may be displayed during a zapping time, which is the time it takes to change broadcasting channel, thus simplifying the process of outputting the advertisement and the broadcasting data.

### [Description of Drawings]

FIG. 1 is a diagram showing a configuration of a system including an apparatus for controlling an advertisement according to an embodiment of the present invention;
FIG. 2 is a diagram showing a connection structure of the system shown in FIG. 1;
FIG. 3 is a block diagram of a configuration of an apparatus for controlling an advertisement according to an embodiment of the present invention;
FIG. 4 is a block diagram showing a configuration of a control unit of FIG. 3;
FIG. 5 is a diagram illustrating an operation of an apparatus for controlling an advertisement according to an embodiment of the present invention;
FIG. 6 is a flow chart illustrating an advertisement data update operation according to an embodiment of the present invention; and
FIG. 7 is a flow chart showing a method for controlling an advertisement according to an embodiment of the present invention.

### [Best Mode]

Hereinafter, embodiments of the present invention will be described with reference to the accompanying drawings. Moreover, for convenience of description, the present disclosure may omit detailed explanation of related technologies, some of which are described more fully in related applications PCT/KR2012/007920 and PCT/KR2012/004321, incorporated herein by reference.

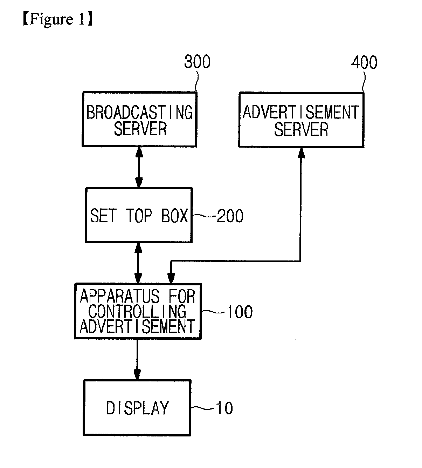

FIG. 1 is a diagram showing a configuration of a system including an apparatus for controlling an advertisement according to an embodiment of the present invention.

Referring to FIG. 1, a system (hereinafter, referred to as a 'system for controlling an advertisement') including an apparatus 100 for controlling an advertisement according to an embodiment of the present invention includes the apparatus 100 for controlling an advertisement, a display 10, a set-top box (STB) 200, a broadcasting server 300, and an advertisement server 400.

The broadcasting server 300 may stores content, such as games, videos, television shows, and the like, and may also store other content-related information. In an embodiment, the broadcasting server 300 stores a broadcasting data corresponding to broadcast and an information related to the broadcasting data (hereinafter, referred to as a 'broadcast information'). The broadcast server 300 provides requested broadcasting information and broadcasting data to the set-top box 200. The broadcasting server 300 may be a cable broadcasting server, a satellite broadcasting server, or another type of broadcasting server.

The advertisement server 400, which stores a advertisement data corresponding to an advertisement, which may be provided by an advertiser, and an information related to the advertisement data (hereinafter, referred to as a 'advertisement information'). The advertisement server 400 provides the advertisement data and the advertisement information to the apparatus 100. The advertisement data and the advertisement information may be stored in the advertisement server 400 based on a previously-established contract with one or more advertisers. In addition, the advertisement server 400 generates advertisement update data to update the advertisement data whenever a new advertisement is registered or otherwise provided to the advertisement server 400, and transmits the advertisement update data to the apparatus 100 for controlling an advertisement in accordance with a predetermined schedule.

After an advertisement has been provided to the apparatus 100 and displayed on the display 10, the advertisement server 400 may receive advertisement completion information indicating that the advertisement is completed from the apparatus 100 for controlling an advertisement. In this case, the advertisement server 400 deletes or processes the advertisement information and the advertisement based on the advertisement completion information.

The set-top box 200 is coupled to the broadcasting server 300 and communicates with the broadcasting server 300. The set-top box 200 receives the broadcasting information and the broadcasting data from the broadcasting server 300. In an embodiment, the set-top box 200 may also receive the advertisement information and the advertisement from the advertisement server 400 and transfer the received advertisement information and advertisement to the apparatus 100 for controlling an advertisement. The set-top box 200 stores and manages the received broadcasting data. In an embodiment, set-top box 200 provides the stored broadcasting information, the broadcasting data, and the like, to the apparatus 100 for controlling an advertisement in response to a control signal received from the apparatus 100 for controlling an advertisement.

For example, when one or more display control signals, such as a broadcasting information request signal, a broadcasting channel change signal, or the like, are received from a remote controller, the apparatus 100 for controlling an advertisement transmits the received signal to the set-top box 200. The apparatus 100 for controlling an advertisement outputs the broadcasting information and the broadcasting data received from the set-top box 200 to the display 10 based on display control signals.

As described above, data corresponding to requested broadcasting information or broadcasting data may be displayed through a screen of the display 10. The display 10, which may be, for example, the display of a television, is provided to display content, such as broadcasting data, and advertisements to a user. In an embodiment, the display 10 may include a cathode ray tube (CRT) display, a liquid crystal display (LCD), a light emitting diode (LED), or a plasma display panel (PDP).

The apparatus 100 for controlling an advertisement downloads the advertisement update data from the advertisement server 400 based on a predetermined schedule to update the stored advertisement data. In this case, the apparatus 100 for controlling an advertisement manages the advertisement data received from the advertisement server 400 according to a sequence given in the advertisement data.

When a broadcasting channel change signal included in the display control signal is input, the apparatus 100 for controlling an advertisement detects the broadcasting channel change signal and outputs pre-stored advertisement data to the display 10. While the apparatus 100 for controlling an advertisement outputs the advertisement data to the display 10, the apparatus 100 for controlling an advertisement blocks the output of the broadcasting data to the display 10 for a preset time. In an embodiment, the apparatus 100 for controlling an advertisement sequentially provides the stored advertisement data to the display 10 according to the sequence given in the advertisement data. The apparatus 100 for controlling an advertisement blocks or ceases to output the advertisement data and releases the blocking of the output of the broadcasting data after a predetermined time has elapsed, thereby allowing broadcasting data of the channel to which the change has been requested to be output through the display 10.

In an embodiment, after the advertisement is completed, the apparatus 100 for controlling an advertisement may delete the advertisement data and the advertisement information.

Thus, as described above, the apparatus 100 for controlling an advertisement controls the display of an advertisement to a user using a zapping time, which is the time period that elapses when changing from one channel to another or from one digital content to another digital content..

Although various components of a system in accordance with an embodiment of the present invention are shown in FIG. 1, other configurations are possible. For example, the display 10, the apparatus 100 for controlling an advertisement, and the set-top box 200 may be implemented to be physically separated from each other, or they may be integrated in various combinations. That is, in an embodiment, the display 10 and the apparatus 100 for controlling an advertisement may be integrated while the set-top box 200 is physically separate, or the display 10, the apparatus 100 for controlling an advertisement, and the set-top box 200 may be implemented as an integrated apparatus to provide content to users.

In other words, the apparatus 100 for controlling an advertisement according to an embodiment of the present invention may be implemented as an independent apparatus. However, the apparatus 100 for controlling an advertisement according to another embodiment of the present invention may be integrated with the display 10 and/or the set-top box 200.

Hereinafter, for convenience of description, an embodiment in which the display 10, the apparatus 100 for controlling an advertisement, and the set-top box 200 are implemented as separate components will be described. However, one of skill in the art will recognize that, in other embodiments, some components described below may be omitted or modified without departing from the scope and spirit of the present invention.

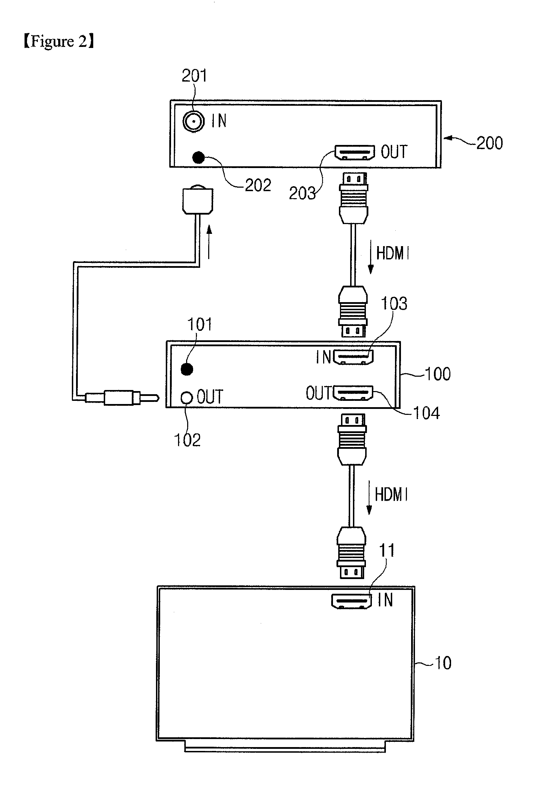

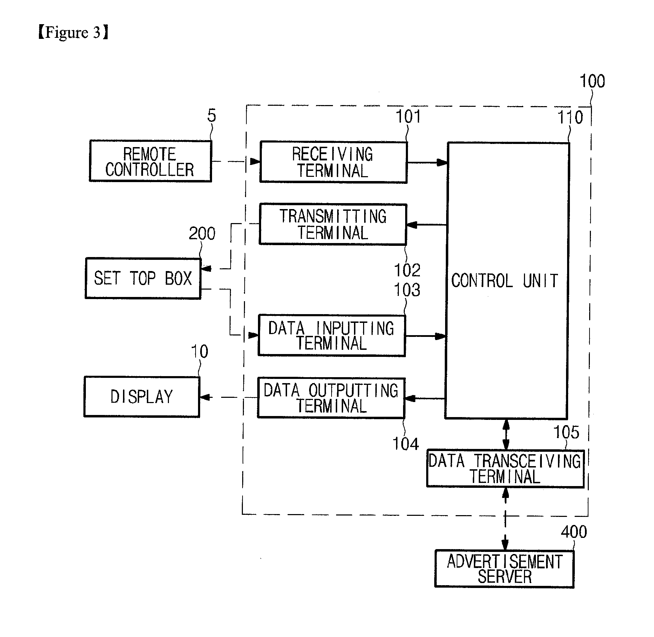

FIG. 2 is a diagram showing a connection structure of a system to including an apparatus for controlling an advertisement according to an embodiment of the present invention. FIG. 3 is a block diagram illustrating a configuration of an apparatus for controlling an advertisement according to an embodiment of the present invention.

Referring to FIGS. 2 and 3, an apparatus 100 for controlling an advertisement according to an embodiment of the present invention includes a transceiver for transmitting and receiving a display control signal and an input/output terminal for inputting and outputting data, which may be disposed at an outer portion of a body. In an embodiment, the display control signal may be an infrared (IR) signal, but is not limited thereto. For example, the display control signal may be an electrical signal recognizable by the apparatus 100 for controlling an advertisement. However, the following paragraphs describe an embodiment in which the display control signal is an IR signal.

As shown in FIG. 2, the transceiver includes a receiving terminal 101 and a transmitting terminal 102 disposed on a front surface of the body of the apparatus 100. Here, the receiving terminal 101 receives a signal according to an operation of a remote controller (not shown). As an example, the receiving terminal 101 receives a broadcasting information request signal, a broadcasting channel change signal, and the like, from the remote controller.

The transmitting terminal 102 transmits the display control signal received through the receiving terminal 101 to the set-top box 200. In an embodiment, the transmitting terminal 102 may be connected to a receiving terminal 202 of the set-top box 200 through an IR blaster cable. However, in another embodiment, if the transmitting terminal 102 of the apparatus 100 for controlling an advertisement and the receiving terminal 202 of the set-top box 200 are disposed to face each other, a separate IR blaster cable may not be necessary. In addition, the set-top box 200 and the apparatus 100 for controlling an advertisement may be electrically coupled using other wired configurations or wireless configurations.

Although not shown in FIG. 2, the transceiver may further include a data transceiving terminal 105 configured to receive the advertisement update data from the advertisement server 400 and transmit advertisement completion information to the advertisement server 400. The data transceiving terminal 105 will be described in more detail with reference to FIG. 3.

In an embodiment, the input/output terminal may include a data inputting terminal 103 and a data outputting terminal104. The data inputting terminal 103 is electrically connected to a data outputting terminal203 of the set-top box 200 to receive the broadcasting data output from the set-top box 200. Meanwhile, the data outputting terminal104 is electrically connected to a data inputting terminal11 of the display 10 to output the broadcasting data input to the data inputting terminal 103 or the advertisement data received through the data transceiving terminal 105 to the display 10.

In this embodiment, the data inputting terminal 103 and the data outputting terminal104 are preferably connected to the set-top box 200 and the display 10 through a high-definition multimedia interface (HDMI) cable, but embodiments of the present invention are not limited thereto.

The connection scheme of the data inputting terminal 103 and the data outputting terminal104 may be different in various embodiments, depending on whether and how the display 10, the apparatus 100 for controlling an advertisement, and the set-top box 200 are implemented as physically separate devices or as an integrated apparatus. Although an embodiment in which the display 10, the apparatus 100 for controlling an advertisement, and the set-top box 200 are connected to each other through a cable is shown in FIG. 2, in an embodiment in which the display 10 and the apparatus 100 for controlling an advertisement are formed integrally with each other, the data outputting terminal 104 may be electrically connected to the data inputting terminal 11 of the display 10 by various methods such as a wiring rather than the cable, and in an embodiment in which the set-top box 200 and the apparatus 100 for controlling an advertisement are formed integrally with each other, the data inputting terminal 103 may be electrically connected to the data outputting terminal 203 of the set-top box 200 by various methods such as a wiring.

Referring to FIG. 3, the apparatus 100 for controlling an advertisement may further include a control unit 110. The control unit 110 processes the display control signals received through the receiving terminal 101 and transmitted through the transmitting terminal 102. The control unit 110 also processes the broadcasting data input through the data inputting terminal 103 and output through the data outputting terminal 104, the advertisement data and the advertisement information transceived through the data transceiving terminal 105, and the like. In an embodiment, the control unit 110 controls the output of the broadcasting data and the output of the advertisement data when the broadcasting channel change signal is input during a period in which the broadcasting data is output through the display 10.

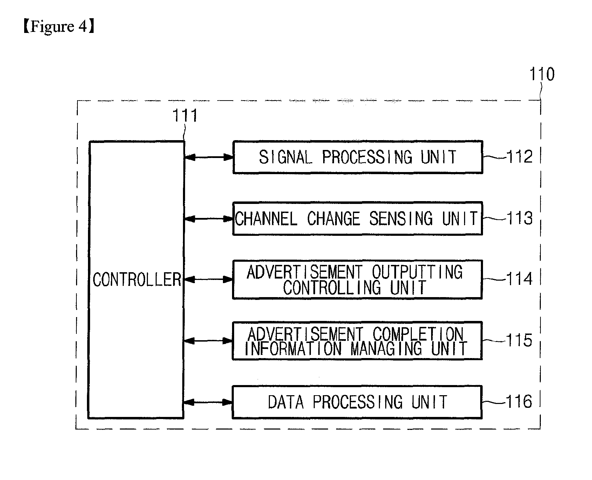

A configuration of the control unit 110 will be described with reference to FIG. 4.

FIG. 4 is a block diagram illustrating a configuration of a control unit 110 of FIG. 3. Referring to FIG. 4, a control unit 110 according to an embodiment of the present invention includes a controller 111, a signal processing unit 112, a channel change sensing unit 113, an advertisement outputting controlling unit 114, an advertisement completion information managing unit 115, and a data processing unit 116. In an embodiment, the controller 111 controls each unit 112 to 116 of the control unit 110.

The signal processing unit 112 processes a signal received through the receiving terminal 101 and transmits the display control signals through the transmitting terminal 102 according to a control command.

The channel change sensing unit 113 senses a broadcasting channel change signal among received display control signals. The display control signals may be generated by manipulation of the remote controller.

The advertisement outputting controlling unit 114 blocks the output of the broadcasting data when the broadcasting channel change signal is sensed by the channel change sensing unit 113. For example, the advertisement output controlling unit 114 may block or stop the output of the broadcasting data to the display 10. In addition, the advertisement outputting controlling unit 114 controls the output of the advertisement data to the display 10. Here, the advertisement data is data updated according to a predetermined schedule by the advertisement server 400. When a preset time elapses from a point in time at which the advertisement data are output to the display 10, the advertisement outputting controlling unit 114 blocks a signal corresponding advertisement data. The advertisement outputting controlling unit 114 releases the blocking of the output of the broadcasting data while blocking the output of the advertisement data.

The advertisement completion information managing unit 115 generates advertisement completion information on the advertisement data output to the display 10 and transmits the generated advertisement completion information to the advertisement server 400. The advertisement completion information may include a list of the advertisement data output to the display 10 during a predetermined period. As another example, if a separate wireless network communication mechanism is not provided in the apparatus 100 for controlling an advertisement, the advertisement completion information managing unit 115 may also transmit the advertisement completion information to the advertisement server through the set-top box 200.

The data processing unit 116 processes the broadcasting information and the broadcasting data input through the data inputting terminal and allows the processed broadcasting information and broadcasting data to be output through the data outputting terminal.

The data processing unit 116 downloads the advertisement update data from the advertisement server 400 based on a predetermined schedule to sequentially update the advertisement data. The data processing unit 116 outputs the advertisement data sequentially according to preset sequence information based on a control command of the advertisement outputting controlling unit 114. When the output of the advertisement data ceases because the predetermined time has elapsed, the subsequently input broadcasting data, that is, the broadcasting data of a broadcasting channel into which a change is requested, is output to the display 10 through the data outputting terminal 104.

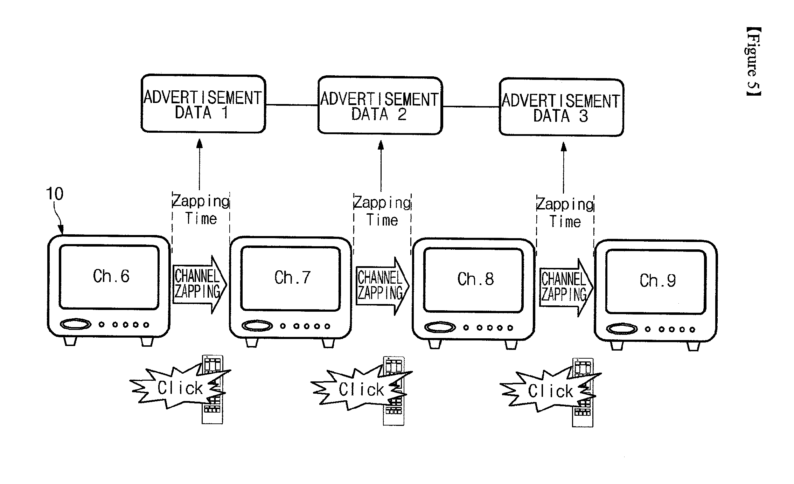

FIG. 5 is illustrates an operation of an apparatus for controlling an advertisement according to an embodiment of the present invention.

As shown in FIG. 5, when the user operates a channel changing button, for example, a channel changing button of the remote controller to change a channel to an upper channel, or the channel up button, while viewing broadcasting data of Channel 6 (Ch. 6) through the display 10, the apparatus 100 for controlling an advertisement allows a first advertisement data (advertisement data 1) updated from the advertisement server 400 to be output through the display 10 for a preset time, for example, 1 second or 2 seconds, which is a time required for changing the broadcasting data of Channel 6 (Ch. 6) to broadcasting data of Channel 7 (Ch. 7), which is an upper channel.

Meanwhile, when the user again operates the channel changing button for the upper channel of the remote controller, the apparatus 100 for controlling an advertisement allows a second advertisement data (advertisement data 2) updated from the advertisement server 400 to be output through the display 10 for a preset time before outputting broadcasting data of Channel 8 (Ch. 8), which is an upper channel.

Likewise, when the user again operates the channel up button of the remote controller, the apparatus 100 for controlling an advertisement allows a third advertisement data (advertisement data 3) updated from the advertisement server 400 to be output through the display 10 for a preset time before outputting broadcasting data of Channel 9 (Ch. 9), which is an upper channel.

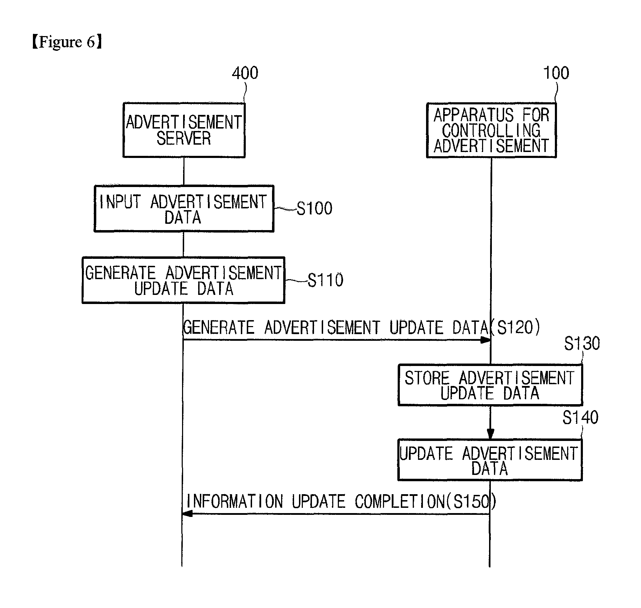

FIG. 6 is a flow chart illustrating an advertisement data update operation according to an embodiment of the present invention. Referring to FIG. 6, when advertisement data registered from an advertiser are input (S100), the advertisement server 400 generates advertisement update data (S110) and transmits the generated advertisement update data to the apparatus 100 for controlling an advertisement (S120).

In this case, the apparatus 100 for controlling an advertisement stores the advertisement update data received from the advertisement server 400 (S130). In an embodiment, the advertisement update data includes advertisement information and advertisement data. In addition, the apparatus 100 for controlling an advertisement updates the advertisement information and the advertisement data included in the advertisement update data stored in the process 'S130' (S140). Then, the apparatus 100 for controlling an advertisement informs the advertisement server 400 that the update for the advertisement data has been completed (S150).

Therefore, the apparatus 100 for controlling an advertisement allows the advertisement information and the advertisement data updated in the process 'S140' to be output through the display 10 whenever a broadcasting channel change signal is input.

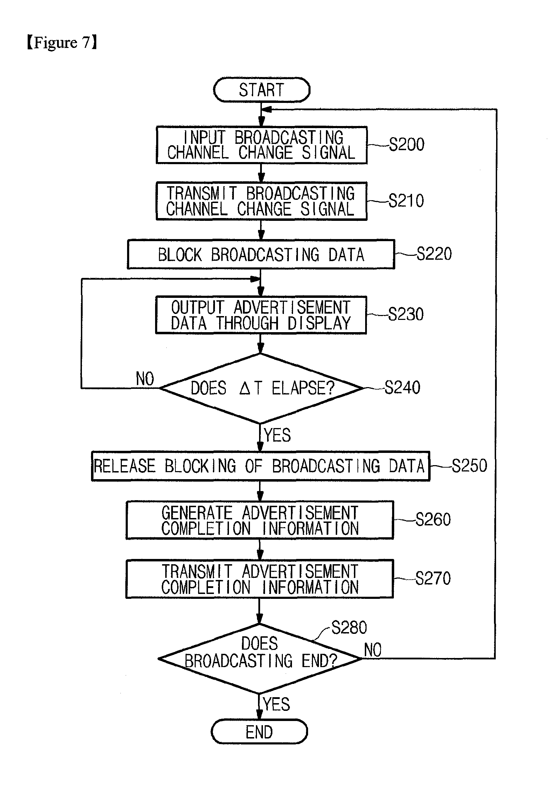

FIG. 7 is a flow chart illustrating a method for controlling an advertisement according to an embodiment of the present invention. Referring to FIG. 7, when a broadcasting channel change signal is input (S200), the apparatus 100 for controlling an advertisement according to the exemplary embodiment of the present invention transmits the corresponding broadcasting channel change signal to the set-top box 200 (S210).

Meanwhile, the apparatus 100 for controlling an advertisement blocks output of broadcasting data to the display 10 (S220) and outputs corresponding advertisement data through the display 10 for a preset time (S230). When the preset time elapses (S240), the apparatus 100 for controlling an advertisement blocks, or ceases, the output of the corresponding advertisement data and stops blocking the output of the broadcasting data (S250). Therefore, the apparatus 100 for controlling an advertisement allows broadcasting data of a broadcasting channel into which a change is requested to be output through the display 10.

Then, the apparatus 100 for controlling an advertisement generates advertisement completion information corresponding to advertisement data of which an advertisement is completed through the display 10 (S260) and transmits the advertisement completion information to the advertisement server 400 (S270).

In an embodiment, the processes 'S260' and 'S270' may not be performed whenever the advertisement data are output, but may be performed according to a predetermined unit such as a period, a number of times, or the like.

The processes of 'S200' to 'S270' are repeatedly performed until a broadcasting end command is input, and a corresponding operation ends when the broadcasting end command is input (S280).

Although an apparatus and method for controlling an advertisement according to embodiment of the present invention have been described with reference to the accompanying drawings, the present invention is not limited to the disclosed embodiments and the accompanying drawings in the present specification, but may be modified without departing from the scope and spirit of the present invention.

### [Industrial Applicability]

An apparatus and method for controlling an advertisement according to an embodiment of the present invention may be used for an apparatus for providing broadcasting data.

## Claims

1. a receiving terminal disposed in direction of a front of a display and configured to receive a display control signal according to an operation of a remote controller;
a transmitting terminal configured to transmit the display control signal to a set-top box that manages broadcasting data;
a data inputting terminalelectrically coupled to a data outputting terminalof the set-top box and configured to receive broadcasting data from the set-top box;
a data transceiving terminal coupled to an advertisement server and configured to receive advertisement data and advertisement information stored in the advertisement server;
a data outputting terminalelectrically coupled to the display and configured to output the content and the advertisement data input to the data inputting terminalto the display; and
a control unit configured to block output of the content to the display, and control output of the advertisement data,
wherein the control unit blocks output of the content when a channel change signal is received, and
wherein the channel change signal is received through the receiving terminal during a period in which the content is output through the display.

2. The apparatus for controlling an advertisement according to claim 1, wherein the control unit includes:
a channel change sensing unit configured to sense the channel change signal among a plurality of signals, the plurality of signals being provided according to the operation of the remote controller;
an advertisement outputting controlling unit configured to block output of the content to the display, and cause the advertisement data received from the advertisement server to be output to the display for a predetermined time when the channel change signal is sensed by the channel change sensing unit; and
an advertisement completion information managing unit configured to generate advertisement completion information for the advertisement data output to the display, and transmit the generated advertisement completion information to the advertisement server.

3. The apparatus for controlling an advertisement according to claim 2, wherein the advertisement outputting controlling unit is configured to block output of the advertisement data when the predetermined time elapses, wherein the predetermined time begins at a point in time at which the advertisement data input from the set-top box is output to the display.

4. The apparatus for controlling an advertisement according to claim 3, wherein the advertisement outputting controlling unit is configured to stop blocking of the output of the broadcasting data to the display when the predetermined time elapses.

5. The apparatus for controlling an advertisement according to claim 2, wherein the advertisement completion information managing unit is configured to generate a list of advertisement data output to the display during a predetermined period and transmit the generated list to the advertisement server.

6. The apparatus for controlling an advertisement according to claim 2, wherein the control unit further includes a data processing unit configured to manage the advertisement data received from the advertisement server.

7. The apparatus for controlling an advertisement according to claim 6, wherein the data processing unit is configured to download advertisement update data from the advertisement server according to a predetermined schedule to sequentially update the advertisement data.

8. The apparatus for controlling an advertisement according to claim 6, wherein the data processing unit is configured to output the advertisement data to the display according to preset sequence information based on a control command of the advertisement outputting controlling unit and delete the advertisement data output to the display.

9. The apparatus for controlling an advertisement according to claim 1, wherein the transmitting terminal is configured to transmit infrared (IR) signals, and the receiving terminal is configured to receive the infrared (IR) signals.

10. A method for controlling an advertisement, comprising:
sensing a channel change signal among a plurality of signals provided according to an operation of a remote controller during a period in which content provided from a set-top box is output through a display;
blocking output of the content to the display when the channel change signal is sensed;
outputting advertisement data received from an advertisement server in which the advertisement data and advertisement information are stored to the display for a predetermined time; and
blocking output of the advertisement data and outputting the content to the display when the predetermined time elapses,
wherein the predetermined time begins at a point in time at which the advertisement data is output to the display.

11. The method for controlling an advertisement according to claim 10, wherein in outputting the advertisement data, the advertisement data is output to the display according to preset sequence information for the advertisement data.

12. The method for controlling an advertisement according to claim 10, further comprising transmitting advertisement completion information for the advertisement data output to the display to the advertisement server.

13. The method for controlling an advertisement according to claim 12, wherein the advertisement completion information includes a list of advertisement data output to the display during a predetermined period.

14. The method for controlling an advertisement according to claim 10, further comprising downloading advertisement update data from the advertisement server according to a predetermined schedule to sequentially update the advertisement data.

15. The method for controlling an advertisement according to claim 10, further comprising, after outputting the advertisement data, deleting the advertisement data output to the display.
